Europäisches Patentamt

**European Patent Office**

Office européen des brevets

(11) Publication number: **0 096 144**
**B1**

(12) **EUROPEAN PATENT SPECIFICATION**

(45) Date of publication of patent specification: **25.05.88**

(21) Application number: **82830169.7**

(22) Date of filing: **15.06.82**

(51) Int. Cl.⁴: **G 01 S 13/44,** H 01 Q 3/26,
G 01 S 7/36

(54) **System for the cancellation of intentional disturbance applied to a monopulse phased array radar.**

(43) Date of publication of application:
**21.12.83 Bulletin 83/51**

(45) Publication of the grant of the patent:
**25.05.88 Bulletin 88/21**

(84) Designated Contracting States:
**DE FR GB NL SE**

(56) References cited:
**EP-A-0 065 499**
**DE-A-2 650 547**
**US-A-3 981 014**
**US-A-4 146 889**

**IEE PROCEEDINGS, vol. 129, Pt. F, no. 1,
February 1982, pages 52-58, Hitchin (GB); A.
Farina et al.: "Evaluation of sidelobe-canceller
performance".**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Farina, Alfonso
Via delle Vigne 80
Roma (IT)**

(74) Representative: **Gustorf, Gerhard, Dipl.-Ing.
Patentanwalt Dipl.-Ing. Gerhard Gustorf
Mühlenstrasse 1
D-8300 Landshut (DE)**

Courier Press, Leamington Spa, England.

## Description

The invention relates to a monopulse radar system having a phased array antenna, in accordance with the precharacterizing part of claim 1.

The performance of a phased array radar may be deteriorated by the receipt through its antenna side lobes, of disturbances originating from different directions in space (jammer). The present invention provides a system in which these disturbances are filtered out.

Up to now, substantially two methods of different complexity have been used for cancelling said disturbances.

The first method is based on mechanical scanning radar and consists in the placing of one or more auxiliary antennas around the phased array antenna for receiving the disturbances. The signals originating from the auxiliary antennas are multiplied by coefficients (weights) that modify their phases and amplitudes and then are summed.

The resulting signal, an estimate of the signals received from the phased array antenna, is subtracted at the output of the latter, thereby cancelling the disturbances.

This method is equivalent to reducing the main antenna gain in the directions from which the jammers originate.

This method requires the use of a number of antennas at least equal to the disturbances (jammer) to be filtered, of an equal number of receiving channels that will allow the disposal of the received signals in a frequency band suitable for processing, and of an equal number of processing circuits for the multiplication.

A second method consists in the modification of the amplitudes and phases of the signals received from all the elementary radiators constituting the phased array antenna and then combining the modified signals such that there remains a beam in a certain direction of interest and at the same time spatially filtering the disturbances thereby reducing the gain in their direction of incidence.

While this method allows the cancellation of a major number of disturbances, it requires a large number of processing channels and weight calculating circuits (equal to the number of the phased array elementary radiators).

The object of the present invention is to provide a monopulse radar system including cancellation means for cancelling directional disturbances for a phase array radar, efficiently utilizing the available circuitry and allowing the monopulse evaluation of the polar angular coordinates (θ, φ) of a target even in disturbed conditions.

This object is solved by a monopulse radar system having the features of the characterising part of claim 1.

The system according to the present invention permits the spatial filtering of the disturbances by use of the signals originating from two or three antenna beams (indicated by Σ, Δθ, Δφ) normally available in a phased array radar, with electronic scanning in azimuth and/or elevation for performing the "monopulse" evaluation of the polar angular coordinates (θ, φ) of a target.

The system according to the present invention does not require the use of auxiliary antennas and associated processing channels because the three available beams Σ, Δθ, Δφ each make up both the part of the main antenna and the part of the auxiliary antenna, and the signals are already available, in the radar, in channels suitable for processing.

Moreover, the system according to the present invention requires only three cancellation circuits.

The present invention will now be described with reference to a preferred embodiment shown in the attached figures, in which:

Fig. 1 shows a block diagram of the receiving part of a multi-beam phased array radar for the evaluation of the angular coordinates (θ, φ) of a target, in the presence of intentional disturbances;

Fig. 2 shows a block diagram of the disturbance cancellation system (block 4 of figure 1) by means of processing the signals originating from the beams, and

Fig. 3 shows a block diagram of the circuit for the evaluation of the channel disturbance (block 14 of figure 2).

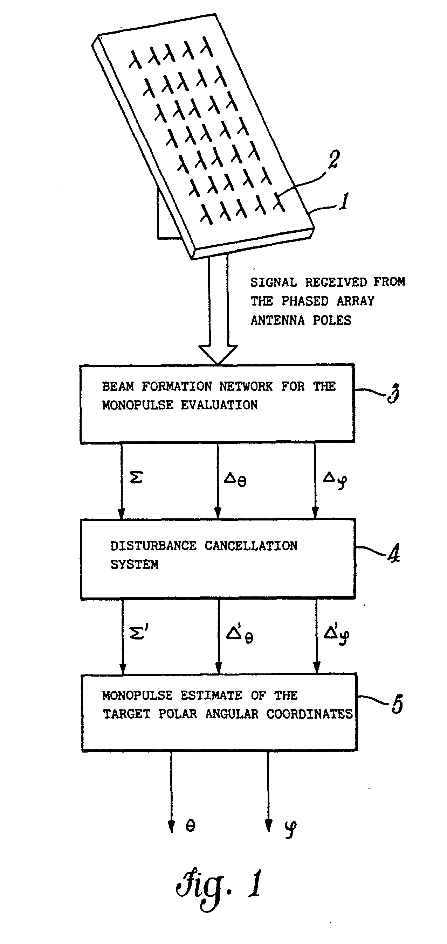

Fig. 1 shows a diagram of a system that permits the reduction of the power relative to the direction disturbances received from the side lobes of a phased array antenna 1 and simultaneously effects the evaluation of the target angular polar coordinates (θ, φ). The planar phased array antenna 1 can be mechanically rotated in the azimuth sense. In the preferred embodiment, the antenna is not rotated.

The signals received by the elementary antennas are linearly combined (that is, multiplied with weights independent of the received signals and summed) in three different ways by means of block 3. Block 3 outputs three beams Σ, Δθ, Δφ, the sum channel signal Σ and the two difference channel signals Δθ and Δφ. The weights of the linear combination are normally obtained by phase shifters inserted after the small elementary antennas. The three beams can as stated explore the space surrounding the antenna 1 either by means of mechanical rotation of the array, or by controlling the phase shifters associated with the antenna 1.

The presence of the three beams is required when it is desired to evaluate with accuracy the angular coordinates (θ, φ) of a target detected by the radar.

However, when directional disturbances are present the target detection operation and the evaluation of the coordinates give a low confidence level.

To improve the radar performance it is necessary to perform a spatial filtering of the disturbances. This is obtained by processing the signals Σ, Δθ, Δφ with a cancellation system 4. At the output of the system 4 three output signals Σ', Δθ', Δφ' are obtained corresponding to the input signals of the said cancellation system 4, but free from directional disturbances.

The output signals $\Sigma'$, $\Delta\theta'$, $\Delta\phi'$ can now be efficiently used for the evaluation of the coordinates ($\theta$, $\phi$) of the target itself, using circuitry included in block 5.

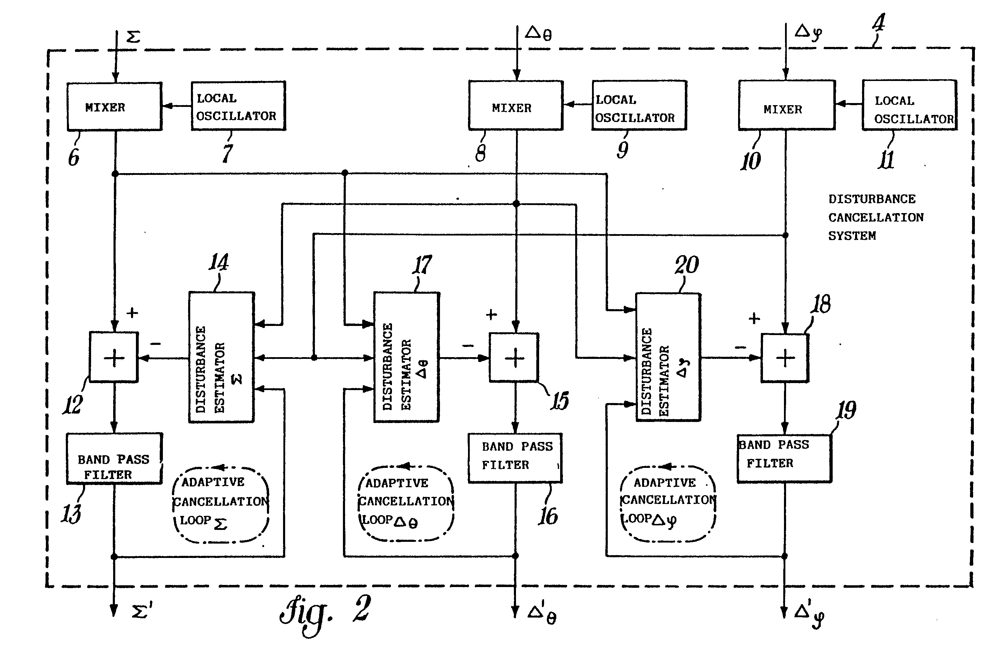

Figure 2 shows the structure of block 4 of figure 1 in detail. In figure 2, three similar circuits, adaptive cancellation loops are provided to minimize the effect of the disturbances on the output signals $\Sigma'$, $\Delta'\theta$, $\Delta'\phi$.

The cancellation should be carried out in the adaptive fashion, that is, considering the fact that the disturbance direction of incidence origin and intensity is not known, and that the spatial configuration of the antenna-jammers is not stationary in time (due to the antenna rotation, the variations of the antenna side lobes and the movement of the jammers themselves).

This objective is obtained by means of disturbance estimators 14, 17 and 20 that use the respective output signals $\Sigma'$, $\Delta'\theta$, $\Delta'\phi$ as feedback signals.

The disturbance estimator that is present in the sum channel for signal $\Sigma$ receives the feedback signal $\Sigma'$ and also utilizes the signals from the other two channels $\Delta\phi$, $\Delta\theta$. Thereby, signals $\Delta\theta$, $\Delta\phi$ act as two auxiliary antenna signals relative to the main antenna signal $\Sigma$.

The disturbance estimator in channel $\Delta\theta$ utilizes as a feedback signal the signal $\Delta\theta'$ and the signals $\Sigma$ and $\Delta\phi$ (acting as auxiliary antenna signals).

The same holds for the disturbance estimator in channel $\Delta\phi$. Consequently, each of the three signals $\Sigma$, $\Delta\theta$, $\Delta\phi$ has the double function of a main antenna signal (to be freed from the disturbance) and of an auxiliary antenna signal that makes it possible to cancel the jammer in the signal considered as main antenna signal.

The outputs of the three evaluators 14, 17 and 20 are subtracted by means of blocks 12, 15 and 18, from the respective signals $\Sigma$, $\Delta\theta$, $\Delta\phi$ to furnish outputs $\Sigma'$, $\Delta'\theta$, $\Delta'\phi$ free from disturbances.

The processing of signals $\Sigma$, $\Delta\theta$, $\Delta\phi$ is carried out in analog manner. Digital processing is also possible.

The processing is carried out at an intermediate frequency to reduce the possibility of errors in the operation of the estimator. While signals $\Sigma$, $\Delta\theta$, $\Delta\phi$ available from the antenna system are shown as being used, necessitating mixers 6, 8 and 10, as well as the local oscillators 7, 9 and 11, these components may instead be present before block 4. Passband filters 13, 16 and 19 are adapted to the detected signals, i.e. to the echo that originates from the target.

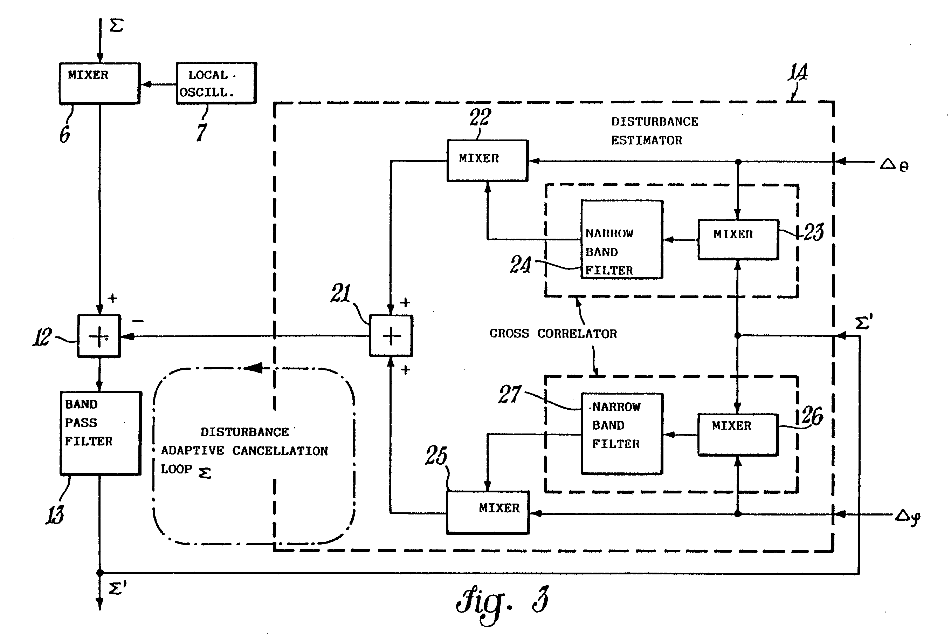

These are useful for frequency filtering the disturbances which generally have a power spectrum with a band larger than that of the radar receiver. The block diagram of block 14, i.e. of the disturbance estimator that acts on channel $\Sigma$ is shown in detail in figure 3.

Similar circuitry is provided in blocks 17 and 20.

The output signal from estimator 14 is obtained by summing in an adder 21 the signals $\Delta\theta$, $\Delta\phi$, the amplitudes and phases of which have been modified by means of mixers 22 and 25 that receive the output signals from the two narrow band filters 24 and 27, respectively. The output signals of the two narrow band filters 24 and 27 respectively constitute the correlation between the feedback signal $\Sigma'$ and the signals $\Delta\theta$, $\Delta\phi$.

The correlations are obtained by multiplying signals $\Sigma'$ with $\Delta\theta$ and $\Sigma'$ with $\Delta\phi$, respectively, by mixers 23 and 26 and then performing a time integration by means of the two filters 24 and 27 that have a time constant much greater than that of the smallest variational period of the jammer, that is a much narrower band than that of filters 13, 16 and 19.

The disturbance estimator acting on $\Sigma'$ forms the sum of the intercepted signals $\Delta\theta$, $\Delta\phi$ multiplied by the correlation coefficient, and the cancellation residual $\Sigma'$.

Since the distances between the phase centers of $\Sigma$, $\Delta\theta$ and of $\Sigma$, $\Delta\phi$ are substantially zero, there is a strong correlation and therefore a high cancellation value between the main channel signal and the auxiliary channel signals.

In conventional systems using auxiliary antennas physically separated from the main antenna, the distance between the phase centers causes a decorrelation between the main and the auxiliary signals produced by a disturbance that travels different distances in order to reach the various antennas, and therefore reduces the system cancellation. The presence of the two auxiliary signals $\Delta\theta$, $\Delta\phi$ in estimator 14 permits to separately evaluate the effects produced by two independent disturbances or to evaluate with greater precision the effects produced by a single jammer and, therefore, to more effectively cancel it.

The reason for the insertion of the system for the cancellation of disturbances (block 4, figure 1) to the intermediate frequency state will now be described.

The cancellation of disturbances can be carried out on video signals that have a zero frequency carrier; consequently, the cross correlators of figure 3 can be accomplished with low pass filters rather than with band pass filters.

However, this type of realization is very sensitive to undesired continuous components (drifts) produced by mixers 23, 26. These drifts alter the optimum value of the correlation coefficients that multiply $\Delta\theta$, $\Delta\phi$ and, therefore, drastically reduce the system cancellation.

A way of filtering the drifts consists in carrying out the cross correlation with pass band filters that do not permit the passage of drift components so that the entire system operates at an intermediate frequency.

The invention can be carried out even if only two monopulse beams are available. If the phased array antenna is of the mechanical azimuth scanning type and with electronic elevation scanning, there are available the two signals

Σ, Δφ, to perform the monopulse evaluation of the target elevation angle.

Also in this case it is possible to cancel the directional disturbances utilizing Σ as the main signal and Δφ as the auxiliary signal and alternatively signal Δφ as the main signal and Σ as its auxiliary signal.

The realization of this form of the invention is similar to that already described.

In particular, blocks 3, 4 (fig. 1) only output (Σ, Δφ), (Σ', Δ'φ), respectively, while block 5 only generates the monopulse estimation of the target elevation φ.

The disturbance cancellation system, illustrated in detail in figure 2, is now made up of only two adaptive loops of cancellation that process the received signals Σ, Δφ cancelling the disturbances by means of the two estimators 14 and 20.

The estimator of the disturbance Σ differs from the one in figure 3 in that the Δθ signal processing is missing and that the output of the estimator is made up of the correlation between Σ', Δφ only. Analogous considerations are valid for the disturbance estimator on Δφ that only calculates the correlation between signals Δ'φ, Σ.

## Claims

1. A monopulse radar system having a phased array antenna (1), a beam forming network (3) for providing a sum channel (Σ) and azimuth and/or elevation difference channels (Δθ, Δφ), means for effecting electronic scanning of the antenna pattern in at least one plane, and received signal processing means for determining the angular coordinates of a target, characterized in that said signal processing means includes means (4, 5) for cancelling disturbances caused by directional jammers, comprising respective disturbance evaluation means (4) in said monopulse channels, each said disturbance evaluation means comprising an adaptive cancellation loop for receiving the output of its channel (Σ', Δθ', Δφ'), calculating the correlation between said output and the signals received in the one or two adjacent channels and thereafter subtracting the signals from the or each adjacent channel, modified by the calculated correlation, from the signal received in the channel to provide a filtered output (Σ', Δθ', Δφ').

2. A system according to claim 1, including means (5) for the monopulse evaluation of the target angular coordinates on the basis of the filtered output (Σ', Δ'θ, Δ'φ).

3. A system according to claim 1 or 2, wherein only the monopulse sum channel (Σ) and the elevation difference channel (Δφ) are provided, while the phased array antenna (1) is rotating in azimuth.

4. A system according to claim 3, including means for the monopulse estimation of the target elevation by means of the filtered output (Σ', Δ'φ).

## Patentansprüche

1. Monopulsradarsystem, mit einer phasengesteuerten Antenne (1), einem Strahlbildungsnetzwerk (3) zur Schaffung eines Summenkanals (Σ') und Azimut- und/oder Höhenwinkeldifferenz-Kanälen (Δθ, Δφ) Mitteln zum Bewirken einer elektronischen Abtastung des Antennenmusters in mindestens einer Ebene, und Empfangssignalverarbeitungsmitteln zum Bestimmen der Winkelkoordinaten eines Ziels, dadurch gekennzeichnet, daß die Signalverarbeitungsmittel eine Einrichtung (4, 5) zum Beseitigen von durch Richtstörsender verursachten Störungen aufweist, umfassend eine jeweilige Störungsauswerteeinrichtung (4) in den Monopulskanälen, von denen jede Störungsauswerteeinrichtung aufweist: eine adaptive Löschschleife zum Empfangen des Ausgangssignals ihres Kanals (Σ', Δθ', Δφ'), zum Berechnen der Korrelation zwischen dem Ausgangssignal und den Signalen, die in einem Kanal oder zwei benachbarten Kanälen empfangen werden, und zum anschließenden Subtrahieren der durch die berechnete Korrelation modifizierten Signale des oder jedes benachbarten Kanals von dem Signal, das in dem Kanal empfangen wird, um ein gefiltertes Ausgangssignal (Σ', Δθ', Δφ') zu liefern.

2. System nach Anspruch 1, mit einer Einrichtung (5) für die Monopulsauswertung der Ziel-Winkelkoordinaten auf der Grundlage des gefilterten Ausgangssignals (Σ', Δ'θ, Δ'φ).

3. System nach Anspruch 1 oder 2, bei dem nur der Monopuls-Summenkanal (Σ) und der Auswertungsdifferenz-Kanal (Δφ) vorgesehen sind, während die phasengesteuerte Antenne (1) sich azimutal dreht.

4. System nach Anspruch 3, mit einer Einrichtung für die Monopulsabschätzung der Target-Höhe mittels des gefilterten Ausgangssignals (Σ', Δ'φ).

## Revendications

1. Un système de radar à mono-impulsion, comportant une rangée d'antennes en phase (1), un réseau de formation de faisceaux (3) fournissant une voie de sommation (Σ) et des voies d'écart d'azimut et/ou de projection verticale (ou site) (Δθ, Δφ)
des moyens pour effectuer le balayage électronique du réseau de l'antenne dans au moins un plan et des moyens de traitement du signal reçu pour déterminer les coordonnées angulaires d'une cible, caractérisé en ce que lesdits moyens de traitement de signal comportent des moyens (4, 5) de suppression des parasites causés par des brouilleurs directionnels, comprenant dans lesdits canaux à mono-impulsion des moyens d'évaluation (4) du brouillage respectif, chacun desdits moyens d'évaluation de brouillage comportant une boucle adaptative de suppression destinée à recevoir la sortie de sa voie (Σ', Δθ', Δφ'), pour calculer la corrélation entre ladite sortie et les signaux reçus dans l'une ou les deux voies adjacentes et ensuite, soustraire, les signaux du ou de chaque voie adjacente, modis par la corrélation calculée, à partir du signal reçu dans la voie afin de fournir une sortie filtrée (Σ', Δθ', Δφ').

2. Un système selon la revendication 1, comportant des moyens (5) pour l'évaluation en mono-impulsion des coordonnées angulaires de la cible à partir de la sortie filtrée ($\Sigma'$ $\Delta'\theta$, $\Delta'\varphi$).

3. Un système selon la revendication 1 ou 2, dans lequel on prévoit seulement la voie de sommation à mono-impulsion ($\Sigma$) et la voie d'écart de projection verticale (ou de site) ($\Delta\varphi$), tandis que la rangée d'antennes en phase (1) est en rotation azimutale.

4. Un système selon la revendication 3, comportant des moyens pour l'estimation mono-impulsion de la projection verticale (ou du site) de la cible à l'aide de la sortie filtrée ($\Sigma'$, $\Delta'\varphi$).

SIGNAL RECEIVED FROM
THE PHASED ARRAY
ANTENNA POLES

BEAM FORMATION NETWORK FOR THE
MONOPULSE EVALUATION — 3

$\Sigma$  $\Delta_\theta$  $\Delta_\varphi$

DISTURBANCE CANCELLATION
SYSTEM — 4

$\Sigma'$  $\Delta'_\theta$  $\Delta'_\varphi$

MONOPULSE ESTIMATE OF THE
TARGET POLAR ANGULAR COORDINATES — 5

$\theta$  $\varphi$

*Fig. 1*

*fig.* 2

0 096 144

Fig. 3